# EUROPÄISCHE PATENTSCHRIFT

(11) **EP 3 655 235 B1**
(45) Veröffentlichungstag und Bekanntmachung des Hinweises auf die Patenterteilung: **23.02.2022**
(21) Anmeldenummer: 18749726.8
(22) Anmeldetag: 16.07.2018
(51) Int. Cl.: B29C 64/245, B29C 64/40, B29C 64/10, B33Y 30/00, B33Y 10/00, B22F 10/20, B29C 64/153

(54) **VERFAHREN ZUR ADDITIVEN FERTIGUNG SOWIE SUBSTRATEINHEIT-SYSTEM**
METHOD FOR ADDITIVE MANUFACTURING AND SUBSTRATE UNIT SYSTEM
PROCÉDÉ DE PRÉPARATION ADDITIVE ET SYSTÈME D'UNITÉ DE SUBSTRAT

(30) Priorität: 17.07.2017 DE 102017115989
(43) Veröffentlichungstag der Anmeldung: 27.05.2020
(73) Patentinhaber: Fraunhofer Gesellschaft zur Förderung der angewandten Forschung e.V., 80686 München (DE)
(72) Erfinder: MASLO, Semir, 52070 Aachen (DE); ARNTZ, Dr. Kristian, 52146 Würselen (DE); WOLLBRINK, Moritz, 52072 Aachen (DE); ZIMMER, Daniel, 52066 Aachen (DE)
(74) Vertreter: Naeven, Ralf
(86) Internationale Anmeldenummer: PCT/EP2018/069301
(87) Internationale Veröffentlichungsnummer: WO 2019/016155

(56) Entgegenhaltungen:
- EP-A1- 3 156 152
- DE-A1-102012 011 217

## Beschreibung

Die Erfindung betrifft ein Verfahren zur additiven Fertigung gemäß dem Oberbegriff des Anspruchs 1 sowie Substrateinheit-System gemäß dem Oberbegriff des Anspruchs 10.

Aus der EP 3 156 164 A1 sind ein Verfahren sowie ein Substrateinheit-System der eingangs genannten Art bekannt. Der herzustellende Formkörper wird bei der additiven Fertigung schichtweise auf einer Auftragsoberfläche der Substrateinheit aufgebaut, z.B. mittels Selective Laser Melting (SLM). Dabei wird beispielsweise ein Pulver eines Ausgangswerkstoffes in einer definierten dünnen Schicht auf die Auftragsoberfläche aufgebracht und mittels einer Energiezufuhr, z.B. in Strahlform, beispielsweise mittels eines Lasers, lokal aufgeschmolzen und mit der Auftragsoberfläche verbunden. Nacheinander werden auf diese erste Schicht in entsprechender Weise weitere Schichten aufgetragen, bis der Formkörper die gewünschte Form, ggf. auch eine Rohform, aufweist. Für eine gute stoffliche Verbindung zwischen dem Ausgangswerkstoff des Formkörpers und der Auftragsoberfläche ist letztere aus einem geeigneten Material hergestellt, welches z.B. dem Material des Ausgangswerkstoffes entspricht. Für Formkörper aus unterschiedlichen Ausgangsmaterialien werden somit unterschiedliche Substrateinheiten mit unterschiedlichen Materialien für die Auftragsoberfläche benötigt.

Oftmals ist es erforderlich, den Formkörper einer weiteren Bearbeitung zuzuführen, z.B. Fräsen, Schleifen, Bohren und/oder Wärmebehandlung. Dabei kann eine mehrstufige Prozesskette durchlaufen werden. Aus diesem Grunde werden regelmäßig die Formkörper von der Substrateinheit getrennt und mit individuell angepassten Spannsystemen zu den weiteren Prozessschritten transportiert.

Das Trennen des Formkörpers von der Substrateinheit kann z.B. manuell oder teilmanuell durch Sägen oder Drahtfunkenerosion realisiert werden. Die Trennung wird in der Regel manuell durchgeführt, wobei eine Trennebene einen vom Trennverfahren abhängigen Mindestabstand zur Auftragsfläche aufweisen sollte. Für diesen Mindestabstand muss ein zusätzliches Aufmaß erzeugt werden, was nachteilig mit zusätzlichem Material- und Prozessaufwand verbunden ist. Im vorgenannten Stand der Technik, bei dem die Auftragsoberfläche eine komplexe Kontur aufweisen kann, wird für den Trennvorgang eine Säurebehandlung vorgeschlagen.

Die Substrateinheit ist nach dem Trennvorgang entweder nicht mehr verwendbar oder aber es kommt durch den Trennvorgang zu einem Verschleiß oder einer mechanischen oder thermischen Beschädigung, so dass die Substrateinheit nach einer gewissen Nutzungsanzahl ausgetauscht oder aber regeneriert werden muss.

Der Trennvorgang und der Bedarf an neuen Substrateinheiten erhöhen den Zeitaufwand und die Kosten. Zudem werden innerhalb einer Gesamtprozesskette mit Weiterbearbeitungsschritten die Automatisierungsmöglichkeiten eingeschränkt.

Es ist allgemein bekannt, zur Erhöhung der Produktivität bei der additiven Fertigung mehrere, unter Umständen auch unterschiedliche Formkörper in einem Arbeitsgang auf derselben Substrateinheit aufzubauen. Zur Optimierung der Auslastung wird hierfür der Abstand zwischen den Formkörpern auf der Substrateinheit möglichst gering gehalten. Dies hat jedoch den Nachteil, dass die Formkörper für eventuell notwendige weitere Bearbeitungsschritte nicht mehr zugänglich sind und die Formkörper vor dem weiteren Bearbeiten von der Substrateinheit gelöst werden müssen. Dies erfordert oftmals aufwändige Trenn- und Einspannschritte, ggf. in Spezialspannvorrichtungen, die zeit- und kostenintensiv sein können. Sofern ein neues Einspannen erforderlich ist, fehlen oftmals geeignete Referenzebenen für die genaue Ausrichtung auf Bearbeitungsmaschinen. Dann können optische oder taktile Messungen zur Lagebestimmung erforderlich sein.

Die DE 10 2012 011 217 A1 offenbart ein Verfahren zum Herstellen eines Bauteils, bei dem ein oder mehrere Rohbauteile additiv auf einer Trägerplatte gefertigt werden. Diese Trägerplatte wird anschließend in einer Bearbeitungsmaschine eingespannt, an der weitere Arbeitsschritte durchgeführt werden. Die Trägerplatte ist in eine Mehrzahl von Trägerplattenabschnitten unterteilbar, wobei jede der Trägerplattenabschnitte zum Tragen von jeweils mindestens einem additiv zu fertigenden Rohbauteil dient. Die Trägerplattenabschnitte sind lösbar miteinander verbunden und können auf einer Basisplatte angeordnet und mit dieser zum Beispiel über Schrauben verbunden sein. In einer Ausführungsform weist die Basisplatte Ausnehmungen auf, in die die Trägerplattenabschnitte mit einem Plattenfuß eingesetzt werden können. Offensichtlich erfolgt das Einsetzen derart, dass die Trägerplattenabschnitte bündig aneinander angrenzen, sodass insgesamt eine durchgehende Trägerplatte aus den Trägerplattenabschnitten gebildet ist. Somit bilden die Trägerplatte bzw. die Trägerplattenabschnitte jeweils eine Substrateinheit, auf der ein oder mehrere Rohbauteile additiv gefertigt werden können. Die der Basisplatten abgewandten Oberflächen der Trägerplattenabschnitte bilden jeweils eine Auftragsoberfläche für den Ausgangswerkstoff zur Bildung der Rohbauteile. Dabei gehen die Oberflächen der Trägerplattenabschnitte während der additiven Fertigung mit dem Ausgangswerkstoff eine stoffschlüssige Verbindung ein. Ansonsten wäre es nicht möglich, die Trägerplattenabschnitte zusammen mit dem Rohbauteil in eine Bearbeitungsmaschine einzuspannen. Die Trägerplattenabschnitte müssen schließlich vom Bauteil getrennt werden, wodurch ein erheblicher Verschleiß an den Trägerplattenabschnitten entstehen kann.

Die DE 10 2012 011 217 A1 offenbart eine Vorrichtung zur Herstellung von dreidimensionalen Bauteilen, wobei eine generative Fertigung der Bauteile auf jeweils einem vorgefertigten Objektunterteil erfolgt. Das vorgefertigte Objektunterteil oder ein Teil hiervon können an einer Sollbruchstelle abgetrennt werden. Eine Auftragsoberfläche ist somit allein auf dem als Substrateinheit dienenden vorgefertigten Objektunterteil gegeben. Mehrere Objektunterteile können in eine Steckhalterung eingesteckt werden, die jedoch nicht als Substrateinheit und auch nicht als Grundlage für einen generativ aufgebauten Körper dient. In den dargestellten Ausführungsformen ragen die vorgefertigten Objektunterteile über die Fläche der Steckhalterung hinaus. Die mit einer Sollbruchstelle versehenen vorgefertigten Objektunterteile bedingen einen nicht unerheblichen Materialausschuss.

Die WO 2016/161276 A1 betrifft ebenfalls ein Verfahren zur Herstellung von Objekten mittels additiver Fertigung. Dort ist es offenbart, mittels der additiven Fertigung zunächst lange und dünne Stützelemente anzufertigen, an deren oberen Ende dann das eigentliche Bauteil, ebenfalls mittels additiver Fertigung, hergestellt wird. Die Stützelemente werden dann vom Objekt abgebrochen, z.B. mittels einer Rotation um ihre Längsachse. Hintergrund ist, dass mittels dieser langgestreckten Stützen eventuelle auf das Objekt übertragene Spannungen einer Substrateinheit vermieden werden sollen. Die Stützelemente werden auf Stiftelementen aufgebaut, die in einer Basisplatte angeordnet sind. Die Stiftelemente können dabei einen Eingriffsbereich zur Durchführung der auf die Stützelemente zu übertragenden Rotation aufweisen. Die Auftragsoberfläche für den Ausgangswerkstoff wird nach diesem Stand der Technik allein durch die Stifte zur Verfügung gestellt. Die Basisplatte dient lediglich zur Aufnahme der Stifte in einem erheblichen Abstand zum eigentlichen herzustellenden Objekt. Der Aufbau der vorgeschlagenen Stützstrukturen ist aufwendig und geht mit einem entsprechend hohen Verbrauch an geeignetem Ausgangswerkstoff einher.

Der Erfindung liegt das technische Problem zugrunde, ein Verfahren sowie ein Substrateinheit-System der eingangs genannten Art zur Verfügung zu stellen, welche eine verbesserte Automatisierbarkeit mit sich bringen und/oder kosten- und zeitreduzierend sein können.

Das technische Problem wird bei einem Verfahren der eingangs genannten Art mit den kennzeichnenden Merkmalen des Anspruchs 1 und bei einem Substrateinheit-System mit den kennzeichnenden Merkmalen des Anspruchs 10 gelöst. Vorteilhafte Ausführungsformen der Erfindung ergeben sich aus den abhängigen Ansprüchen.

Somit wird vorgeschlagen, für die Auftragsoberfläche der Substrateinheit ein Auftragsoberflächenmaterial einzusetzen, welches mit dem Ausgangswerkstoff für den Formkörper während der Verfestigung dieses Ausgangswerkstoffes keine stoffschlüssige Verbindung eingeht. Eine stoffschlüssige Verbindung wird stattdessen zwischen dem Ausgangsmaterial des Formkörpers und mindestens einem Verbindungselement hergestellt. Dieses mindestens eine Verbindungselement kann lösbar in der Substrateinheit angeordnet werden.

Die Auftragsoberfläche kann beispielsweise aus einer Keramik bestehen, während das mindestens eine Verbindungselement z.B. aus demselben Material bestehen kann wie der zu fertigende Formkörper oder aber zumindest eine für die gewünschte stoffschlüssige Verbindung geeignete Oberfläche aufweist. Das mindestens eine Verbindungselement kann zumindest bereichsweise auch aus einem im Vergleich zum Ausgangswerkstoff preisgünstigeren Material bestehen. So kann z.B. für das mindestens eine Verbindungselement Stahl verwendet werden, während der Ausgangswerkstoff eine Nickelbasislegierung ist. Die Auftragsoberfläche kann durch eine Beschichtung auf der Substrateinheit oder durch ein Vollmaterial der Substrateinheit oder eines Teils der Substrateinheit erzeugt sein.

Das erfindungsgemäße Verfahren kann insbesondere so ausgeführt werden, dass das mindestens eine Verbindungselement mittels mechanischer Verriegelung lösbar fixiert wird. Die Verriegelung erfolgt vorzugsweise mittels Formschlusses. Es kann eine Verriegelungseinheit vorgesehen sein, die - zum Beispiel mittels einer Translations- und/oder Rotationsbewegung relativ zu einem anderen Teil der Substrateinheit - das mindestens eine Verbindungselement oder vorteilhaft gleichzeitig eine Mehrzahl von Verbindungselementen fixiert und bei weiterer Bewegung, z.B. in umgekehrter Richtung, wieder freigibt. Die Relativbewegung kann beispielsweise mittels einer Gewindestange, Exzenterhebel, Kniehebel, Spannschraube, Nockenwelle oder dergleichen bewirkt werden.

Durch den fehlenden Stoffschluss zwischen dem Ausgangsmaterial des Formkörpers und der Auftragsoberfläche der Substrateinheit wird letztere geschont und kann oft sowie für eine Vielzahl von Ausgangsmaterialien eingesetzt werden. Das mindestens eine Verbindungselement hingegen ist ein einfach und kostengünstig herstellbarer Verbrauchskörper, dessen Material an das Ausgangsmaterial des Formkörpers angepasst werden kann. Nach dem Fertigstellen des additiven Herstellungsprozesses des Formkörpers kann der Formkörper zusammen mit dem mindestens einen Verbindungselement von der Substrateinheit gelöst und weiteren Bearbeitungsschritten zugeführt werden. Denkbar ist auch, für die weitere Bearbeitung des Formkörpers diesen mitsamt der Substrateinheit zu transportieren und nach der weiteren Bearbeitung den Formköper mit dem(n) Verbindungselement(en) von der Substrateinheit zu trennen.

Des Weiteren ist es möglich, den Formkörper mitsamt dem(n) Verbindungselement(en) von der Substrateinheit zu trennen und auf eine Spannvorrichtung aufzusetzen, die (eine) passende Aufnahme(n) für das (die) mit dem Formkörper verbundene(n) Verbindungselement(e) aufweist. Diese Spannvorrichtung kann mit einer Verriegelungseinheit versehen sein, welche das (die) Verbindungselement(e) in der Spannvorrichtung vorzugsweise formschlüssig fixiert. Die Verriegelungseinheit kann z.B. ähnlich oder entsprechend einer Verriegelungseinheit für die Fixierung des mindestens einen Verbindungselements an der Substrateinheit ausgebildet sein.

Sobald die Verbindungselemente oder deren aus dem Formkörper herausragenden Teile nicht mehr benötigt werden, können diese vom Formkörper getrennt werden, z.B. durch Sägen oder Drahterosion.

Das erfindungsgemäße Verfahren kann auch so ausgeführt werden, dass zusätzlich zum Formkörper ein mit dem Formkörper und dem Verbindungselement oder mindestens einem der Verbindungselemente stoffschlüssig verbundenes Basiselement additiv gefertigt wird. Ein solches Basiselement wäre somit zwischen dem jeweiligen Verbindungselement und dem Formkörper angeordnet. Das Basiselement kann zum Beispiel zum Einspannen in eine konventionelle Spannvorrichtung dienen und wird später mit dem oder den Verbindungselementen vom Formkörper getrennt.

Das erfindungsgemäße Verfahren kann auch so ausgeführt werden, dass die Verfahrensschritte zur Herstellung mindestens zweier, auf derselben Substrateinheit nebeneinander angeordneter Formkörper durchgeführt werden. Dabei kann es sich um in der Form gleiche oder unterschiedliche Formkörper handeln. Dabei können die jeweiligen Schichten der Formkörper in einem gemeinsamen Arbeitsgang hergestellt werden, z.B. werden in einem zusammenhängenden Prozess die untersten Schichten aller Formkörper hergestellt, anschließend die zweite Schicht und so weiter. Wenn alle Herstellungsschritte zum Aufbau der Formkörper auf der Substrateinheit vollzogen sind, können die Verbindungselemente gelöst und die Formkörper von der Substrateinheit entfernt werden.

Das erfindungsgemäße Verfahren kann auch so ausgeführt werden, dass die Substrateinheit vor und/oder während der additiven Fertigung beheizt wird. Die Beheizung kann dabei mittels einer in der Substrateinheit angeordneten Heizeinrichtung erfolgen. Hierdurch kann eine Verringerung der Temperaturdifferenz zwischen der Auftragsoberfläche und dem Formkörper während dessen Herstellung erreicht werden, womit Eigenspannungen und Verzug im Formkörper signifikant reduziert werden können. Die Heizeinrichtung kann z.B. elektrische Heizdrähte, Leitungen für ein Heizfluid und/oder Heizpatronen umfassen.

Die Anordnung des mindestens einen Verbindungselements in der Substrateinheit kann so erfolgen, dass das Verbindungselement in seiner Arbeitsposition eine mit der Auftragsoberfläche bündige oder im Wesentlichen bündige Kontaktfläche für die stoffschlüssige Verbindung mit dem Ausgangswerkstoff aufweist. Die Bündigkeit erleichtert das Abziehen von überschüssigem Ausgangsmaterial nach dem Verfestigen jeweils einer Schicht des Formkörpers.

Dabei kann die Auftragsoberfläche mindestens eine Durchbrechung aufweisen, in die das mindestens eine Verbindungselement hineinragt. Dabei kann eine Durchbrechung für jeweils ein Verbindungselement vorgesehen sein. Die Verbindungselemente können z.B. stiftförmig sein. Sie weisen dabei bevorzugt eine Form auf, welche eine formschlüssige Fixierung ermöglicht, z.B. durch einen Bereich verringerten Durchmessers oder eine sonstige Konturierung auf der Oberfläche.

Das erfindungsgemäße Verfahren und das erfindungsgemäße Substrateinheit-System sind nicht auf bestimmte Arten der additiven Fertigung eingeschränkt. So kann z.B. der Ausgangswerkstoff mit einem Energiestrahl, z.B. einem Laserstrahl, oder auf sonstige Weise erhitzt werden. Es ist auch der Auftrag des Ausgangswerkstoffes, z.B. ein Kunststoff, mittels Düse möglich, oder es wird das sogenannte Binder Jetting durchgeführt, bei dem der Ausgangswerkstoff mit einem Binder verklebt wird, um den Formkörper zu bilden.

Im Folgenden werden bevorzugte Ausführungsformen des erfindungsgemäßen Verfahrens sowie der erfindungsgemäßen Vorrichtung anhand von Figuren dargestellt.

Es zeigt
- Fig1:: eine Substrateinheit in Aufsicht,
- Fig. 2:: die Substrateinheit gem. Fig. 1 ohne Verriegelungseinheit in perspektivischer Ansicht,
- Fig. 3:: die Substrateinheit gem. Fig. 1 mit Verriegelungseinheit in seitlicher Ansicht,
- Fig. 4:: ein Verbindungselement in seitlicher Ansicht,
- Fig. 5:: das Verbindungselement gem. Fig. 4 in einem Ausschnitt der Verriegelungseinheit in Fixierposition,
- Fig. 6:: das Verbindungselement gem. Fig. 4 in einem Ausschnitt der Verriegelungseinheit in Freigabeposition,
- Fig. 7:: in perspektivischer Ansicht die Substrateinheit mit Verbindungselementen, einem Basiselement und einem Formkörper und
- Fig. 8:: im seitlichen Querschnitt die Substrateinheit gem. Fig. 1.

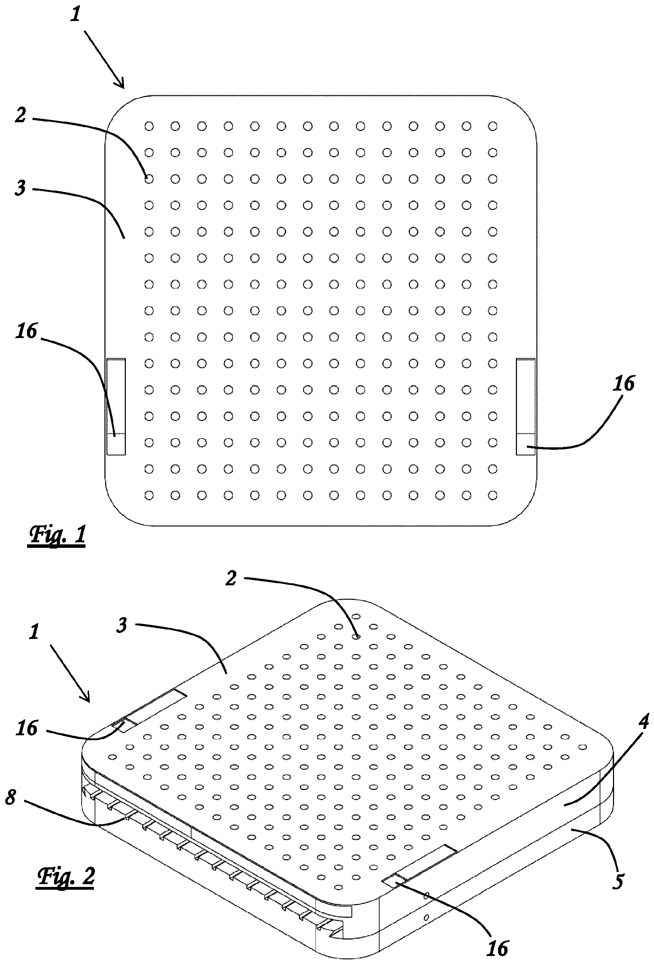

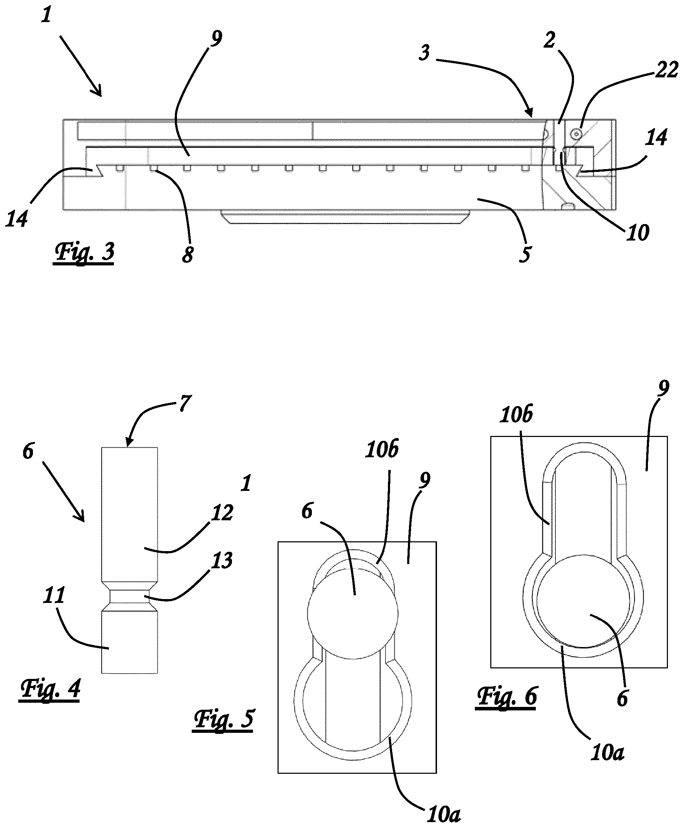

Fig. 1 zeigt in Aufsicht eine Substrateinheit 1 mit einer Vielzahl von Durchbrechungen 2 auf einer Auftragsoberfläche 3. Die Substrateinheit 1 ist in Fig. 2 in perspektivischer Schrägaufsicht und in Fig. 3 in Seitenansicht dargestellt. Die Substrateinheit 1 umfasst ein die Auftragsoberfläche 3 aufweisendes Oberteil 4 sowie ein Unterteil 5. In die Durchbrechungen 4 können Verbindungselemente 6 platziert werden, wie eines beispielhaft in Fig. 4 dargestellt ist. Die Verbindungselemente 6 werden dann so angeordnet, dass sie mit einer Kontaktfläche 7 möglichst bündig mit der Auftragsoberfläche 3 der Substrateinheit 1 sind. Eine Bündigkeit ist aber nicht zwingend, sofern überstehende Teile der Verbindungselemente 6 den Prozess der additiven Fertigung nicht stören. Die eingesetzten Verbindungselemente 6 können auf dem Unterteil 5 aufsitzen. Das Unterteil 5 weist Nuten 8 auf, welche z.B. durch die Durchbrechungen 2 hindurch überschüssiges Ausgangsmaterial aufnehmen können und über die das überschüssige Ausgangsmaterial seitlich abgeführt werden kann.

Die Verbindungselemente 6 werden in der Substrateinheit 1 mittels einer in Fig. 3 dargestellten Verriegelungseinheit 9 fixiert. In Fig. 2 ist die Verriegelungseinheit 9 nicht wiedergegeben. Die Verriegelungseinheit 9 weist für jedes Verbindungselement 6 eine schlüssellochähnliche Aussparung 10 mit einem Kopfteil 10a und einem Bartteil 10b auf, welche in den Fig. 5 und 6 zusammen mit einem Verbindungselement 6 in Aufsicht dargestellt ist. Die Figuren 5 und 6 zeigen die Verriegelungseinheit 9 lediglich in einem kleinen rechteckigen Ausschnitt.

Das Verbindungselement 6 weist ein zylindrisches Fußstück 11 und ein zylindrisches Kopfstück 12 auf, die durch ein Mittelstück 13 verringerten Durchmessers voneinander getrennt sind.

Eine Verriegelung einer Vielzahl von in der Substrateinheit 1 eingesetzten Verbindungselementen 6 erfolgt durch eine translatorische Relativbewegung zwischen der Verriegelungseinheit 9 und dem Oberteil 4 der Substrateinheit 1. Hierfür befinden sich die Verbindungselemente 6 zunächst in einer Freigabeposition, wie sie in Fig. 6 dargestellt ist. In der Freigabeposition gemäß Fig. 6 sind die Verbindungselemente 6 jeweils von in einem der Kopfteile 10a umgeben, deren Durchmesser größer ist als der Durchmesser sowohl des Kopfstückes 12 als auch des Fußstückes des jeweiligen Verbindungselements 6. Durch eine Relativbewegung der Verriegelungseinheit 9 relativ zum Oberteil 4 der Substrateinheit 1 und damit gleichzeitig auch relativ zu den Verbindungselementen 6 wird das jeweilige Mittelstück 12 der Verbindungselemente 6 in das Bartteil 10b geschoben, sodass die Verbindungselemente 6 formschlüssig durch die Verriegelungseinheit 9 und das Oberteil 4 der Substrateinheit 1 verriegelt sind. Fig. 3 zeigt im rechten Teil ausschnittsweise Oberteil 4, Unterteil 5 und die Verriegelungseinheit 9 im Querschnitt im Bereich einer der Aussparungen 10 der Verriegelungseinheit 9 und einer der darüber befindlichen Durchbrechungen 2 im Oberteil 4.

Die Form der Verbindungselemente 6 sowie die Art der Verriegelung können selbstverständlich auch anders gewählt werden.

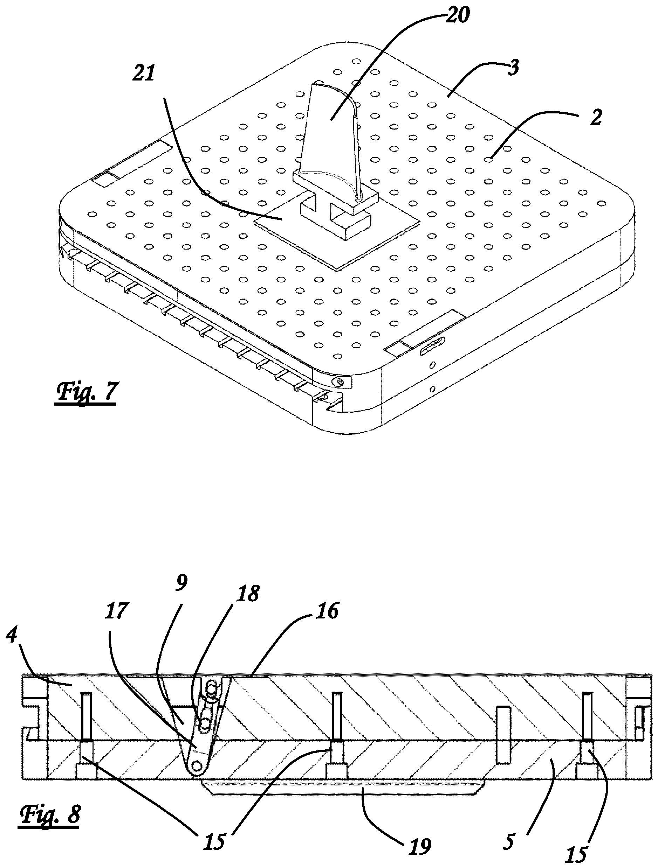

Die Relativbewegung der Verriegelungseinheit 9 relativ zum Oberteil 4 der Substrateinheit 1 wird durch eine beispielsweise im Unterteil der Substrateinheit 1 angeordnete Führung, hier als Beispiel eine Schwalbenschwanzführung, 14 geführt. Wie in dem seitlichen Querschnitt zur Substrateinheit 1 in Fig. 8. sichtbar, sind das Oberteil 4 und das Unterteil 5 der Substrateinheit 1 mittels Schraubverbindungen 15 lösbar aneinander fixiert. Es ist auch denkbar, Oberteil 4 und Unterteil 5 einstückig auszuführen.

Die Relativbewegung zwischen Verriegelungseinheit 9 und dem Oberteil 4 der Substrateinheit 1 kann manuell mittels Schiebern 16 (siehe Fig. 1, 2 und 8) bewirkt werden. Die Schieber 16 sind jeweils gelenkig mit einem am Unterteil 5 der Substrateinheit 1 fixierten Hebel 17 verbunden. Durch ein Verschieben des Schiebers 16 wird der Hebel 17 verschwenkt, der wiederum über einen an der Verriegelungseinheit 9 fixierten Mitnehmer 18 die Verriegelungseinheit 9 relativ zum Oberteil 4 der Substrateinheit 1 verschiebt. Alternativ zu den Schiebern 16 kann die Relativbewegung auch auf andere Weise, z.B. mittels eines Spannnockens, bewirkt werden.

Die Substrateinheit 1 weist eine Spanneinheit 19 auf (siehe Fig. 3 und 8), mit der die Substrateinheit 1 an ein Spannsystem einer Maschineneinheit fixiert werden kann.

Zur Erzeugung eines Formkörpers 20 mittels additiver Fertigung werden die Verbindungselemente 6 in die Substrateinheit 1 eingesetzt und in der beschriebenen Weise mit der Verriegelungseinheit 9 fixiert. In Fig. 7 ist schematisch der Formkörper 20 auf der Substrateinheit 1 dargestellt. Das Material der in den Durchbrechungen 2 oder einer Teilanzahl der Durchbrechungen 2 steckenden Verbindungselemente 6 ist so gewählt, dass es mit einem Ausgangswerkstoff, der zur Herstellung des Formkörpers 20 dient, während des Prozesses der additiven Fertigung eine stoffschlüssige Verbindung eingeht. Das Material der Verbindungselemente 6 kann zum Beispiel mit dem Ausgangswerkstoff identisch sein. Das Material der Auftragsoberfläche 3 ist hingegen so gewählt, dass es mit dem Ausgangswerkstoff während der additiven Fertigung keine stoffschlüssige Verbindung eingeht. Das Material der Auftragsoberfläche 3 kann zum Beispiel eine Keramik sein. Die Auftragsoberfläche 3 kann mit dem entsprechenden Material beschichtet sein oder das Oberteil 4 der Substrateinheit 1 besteht - jedenfalls zur Auftragsoberfläche 3 hin - aus einem entsprechenden Vollmaterial.

Der Ausgangswerkstoff für den Formkörper 20 kann zum Beispiel pulverförmig auf die Auftragsoberfläche 3 aufgetragen und mit einem hier nicht dargestellten Energiestrahl, zum Beispiel einem Laserstrahl, beaufschlagt werden. Bei einem Aufschmelzen des Ausgangswerkstoffes und einer anschließenden Verfestigung kommt es zu einer stoffschlüssigen Verbindung mit den Verbindungselementen 6, die mit dem sich verfestigenden Ausgangswerkstoff in Kontakt stehen. Eine stoffschlüssige Verbindung zwischen Ausgangswerkstoff und Auftragsoberfläche 3 kommt hingegen nicht zustande. Der Formkörper 20 wird nun schichtweise aufgebaut. Ist die additive Fertigung des Formkörpers 20 abgeschlossen, kann die Verriegelung der Verbindungselemente 6 gelöst und der Formkörper 20 von der Substrateinheit 1 abgehoben werden. Es brauchen dann lediglich noch die mit dem Formkörper 20 verbundenen Verbindungselemente 6 abgetrennt zu werden.

Es ist auch möglich, zusätzlich zum Formkörper 20 ein Basiselement 21 aus dem Material des Ausgangswerkstoffes zu fertigen. Ein solches Basiselement 21 ist in Fig. 7 beispielhaft dargestellt. Ein solches Basiselement 21 kann dann sinnvoll sein, wenn die Abstände zwischen den Verbindungselementen 6 zu groß sind, um den Fuß des Formkörpers 20 mit den Verbindungselementen 6 sicher fixieren zu können. Das Basiselement 21 kann aber auch dazu dienen, in ein hier nicht dargestelltes Spannmittel eingespannt zu werden, mit dem der Formkörper 20 nach seiner Fertigstellung auf der Substrateinheit 1 einer weiteren Bearbeitung zugeführt wird. Dies ist dann besonders vorteilhaft, wenn auf derselben Substrateinheit 1 mehrere Formkörper 20 gefertigt werden und die Substrateinheit 1 deshalb weniger geeignet zum Transport der Formkörper 20 zu weiteren Bearbeitungsschritten ist. Das Basiselement 21 kann zu einem geeigneten Zeitpunkt ebenfalls vom Formkörper 20 abgetrennt werden.

Im Oberteil 4 der Substrateinheit 1 kann eine lediglich in Fig. 3 durch Heizrohre 22 angedeutete Heizeinrichtung angeordnet sein. Diese beispielsweise elektrisch oder über ein liquides Heizmittel betriebene Heizeinrichtung kann dazu dienen, das Oberteil 4 der Substrateinheit 1 und damit die Auftragsoberfläche 3 vor, während und/oder nach der additiven Fertigung des Formkörpers 20 aufzuheizen, um möglicherweise schädliche Temperaturgradienten zu vermeiden.

### Bezugszeichenliste

- 1: Substrateinheit
- 2: Durchbrechung
- 3: Auftragsoberfläche
- 4: Oberteil
- 5: Unterteil
- 6: Verbindungselement
- 7: Kontaktfläche
- 8: Nut
- 9: Verriegelungseinheit
- 10: Aussparung
- 10a: Kopfteil
- 10b: Bartteil
- 11: Fußstück
- 12: Kopfstück
- 13: Mittelstück
- 14: Schwalbenschwanzführung
- 15: Schraubverbindung
- 16: Schieber
- 17: Hebel
- 18: Mitnehmer
- 19: Spanneinheit
- 20: Formkörper
- 21: Basiselement
- 22: Heizrohr

## Patentansprüche

1. Verfahren zur additiven Fertigung, bei dem
a) auf eine Auftragsoberfläche (3) einer Substrateinheit (1) ein Ausgangswerkstoff aufgebracht wird,
b) zumindest ein Teil des Ausgangswerkstoffes auf der Substrateinheit (1) zur Bildung eines Formkörpers (20) verfestigt wird,
c) während des Verfahrensschritts nach Merkmal b) eine stoffschlüssige Verbindung zwischen dem Formköper (20) und mindestens einem lösbar an der Substrateinheit (1) angeordneten Verbindungselement (6) erzeugt wird, und
d) der Formkörper (20) von der Substrateinheit (1) gelöst wird,
**dadurch gekennzeichnet, dass**
e) für die Auftragsoberfläche (3) ein Auftragsoberflächenmaterial eingesetzt wird, welches mit dem Ausgangswerkstoff während des Verfahrensschritts b) keine stoffschlüssige Verbindung eingeht.

2. Verfahren nach Anspruch 1, **dadurch gekennzeichnet, dass** dem Ausgangswerkstoff zur Erhitzung mittels mindestens eines Energiestrahls, insbesondere mittels mindestens eines Laserstrahls, Energie zugeführt wird.

3. Verfahren nach Anspruch 1 oder 2, **dadurch gekennzeichnet, dass** das mindestens eine Verbindungselement (6) mittels mechanischer, nämlich formschlüssiger Verriegelung an der Substrateinheit (1) lösbar fixiert wird.

4. Verfahren nach einem der vorhergehenden Ansprüche, **dadurch gekennzeichnet, dass** die Substrateinheit (1) vor und/oder während der additiven Fertigung beheizt wird.

5. Verfahren nach einem der vorhergehenden Ansprüche, **dadurch gekennzeichnet, dass** zusätzlich zum Formkörper (20) ein mit dem Formkörper (20) und dem Verbindungselement (6) oder mindestens einem der Verbindungselemente (6) stoffschlüssig verbundenes Basiselement (21) additiv gefertigt wird.

6. Verfahren nach Anspruch 5, **dadurch gekennzeichnet, dass** zur Bearbeitung des Formkörpers (20) das Basiselement (21) in eine von der Substrateinheit (1) verschiedene Spanneinheit eingespannt und mindestens einer Bearbeitungsvorrichtung zugeführt wird.

7. Verfahren nach einem der vorhergehenden Ansprüche, **dadurch gekennzeichnet, dass** die Verfahrensschritte zur Herstellung mindestens zweier, auf derselben Substrateinheit (1) nebeneinander angeordneter Formkörper (20) durchgeführt werden.

8. Verfahren nach einem der vorhergehenden Ansprüche, **dadurch gekennzeichnet, dass** während des Verfahrensschritts nach Merkmal b) des Anspruchs 1 die stoffschlüssige Verbindung zwischen dem Formköper (20) und mehreren lösbar an der Substrateinheit (1) angeordneten Verbindungselementen (6) erzeugt wird.

9. Verfahren nach einem der vorhergehenden Ansprüche, **dadurch gekennzeichnet, dass** der Formkörper (20) mitsamt dem(n) stoffschlüssig mit dem Formkörper (20) verbundenen Verbindungselement(en) (6) von der Substrateinheit (1) getrennt und auf eine Spannvorrichtung aufgesetzt wird, wobei die Spannvorrichtung (eine) passende Aufnahme(n) für das (die) mit dem Formkörper (20) verbundene(n) Verbindungselement(e) (6) aufweist.

10. Zum Einsatz in einem Verfahren nach einem der Ansprüche 1 bis 9 geeignetes Substrateinheit-System, umfassend
a) eine Substrateinheit (1) mit einer aus einem ersten Material bestehenden Auftragsoberfläche (3), welche für den Auftrag eines für eine additive Fertigung auf der Substrateinheit (1) zu verfestigenden Ausgangswerkstoffes vorgesehen ist, und
b) mindestens ein an der Substrateinheit (1) in einer Arbeitsposition lösbar angeordnetes Verbindungselement (6), wobei das mindestens eine Verbindungselement (6) zur stoffschlüssigen Verbindung mit dem für die additive Fertigung vorgesehenen Ausgangswerkstoff geeignet ist,
**gekennzeichnet durch**
c) ein die Auftragsoberfläche (3) bildendes Auftragsoberflächenmaterial, welches mit dem Ausgangswerkstoff unter den Bedingungen der additiven Fertigung keine stoffschlüssige Verbindung eingeht.

11. Substrateinheit-System nach Anspruch 10, **dadurch gekennzeichnet, dass** das mindestens eine Verbindungselement (6) in der Arbeitsposition eine mit der Auftragsoberfläche (3) bündige oder im Wesentlichen bündige Kontaktfläche für die stoffschlüssige Verbindung mit dem Ausgangswerkstoff aufweist.

12. Substrateinheit-System nach Anspruch 10 oder 11, **dadurch gekennzeichnet, dass** die Auftragsoberfläche (3) mindestens eine Durchbrechung (2) aufweist und das Verbindungselement (6) oder mindestens eines der Verbindungselemente in der Arbeitsposition in die Durchbrechung (2) hineinragt.

13. Substrateinheit-System nach einem der Ansprüche 10 bis 12, **gekennzeichnet durch** eine Verriegelungseinheit (9) zur Fixierung des mindestens einen Verbindungselements (6), wobei die Fixierung formschlüssig ist.

14. Substrateinheit-System nach Anspruch 13, **dadurch gekennzeichnet, dass** die Verrieglungseinheit (9) eingerichtet ist, mindestens zwei Verbindungselemente (6), vorzugsweise sämtliche in der Substrateinheit (1) angeordnete Verbindungselemente (6) zu fixieren.

15. Substrateinheit-System nach Anspruch 13 oder 14, **dadurch gekennzeichnet, dass** die Verriegelungseinheit (9) mindestens eine Aussparung (10) für das mindestens eine Verbindungselement (6) aufweist.

16. Substrateinheit-System nach einem der Ansprüche 13 bis 15, **dadurch gekennzeichnet, dass** die Verriegelungseinheit (9) relativ zu einem weiteren Bestandteil der Substrateinheit (1) für eine Translations- und/oder Rotationsbewegung bewegbar ist.

17. Substrateinheit-System nach einem der Ansprüche 10 bis 16, **gekennzeichnet durch** eine in der Substrateinheit (1) integrierte Heizeinrichtung.

## Claims

1. Method for additive manufacturing, in which
a) a starting material is applied to an application surface (3) of a substrate unit (1),
b) at least a part of the starting material on the substrate unit (1) is solidified to form a shaped body (20),
c) a materially bonded connection between the shaped body (20) and at least one connecting element (6) arranged detachably on the substrate unit (1) is generated during the method step according to feature b), and
d) the shaped body (20) is detached from the substrate unit (1),
**characterized in that**
e) an application surface material which does not form a materially bonded connection with the starting material during method step b) is used for the application surface (3).

2. Method according to Claim 1, **characterized in that** energy is supplied to the starting material for heating purposes by means of at least one energy beam, in particular by means of at least one laser beam.

3. Method according to Claim 1 or 2, **characterized in that** the at least one connecting element (6) is detachably fixed to the substrate unit (1) by means of mechanical, namely form-fitting locking.

4. Method according to one of the preceding claims, **characterized in that** the substrate unit (1) is heated prior to and/or during the additive manufacturing.

5. Method according to one of the preceding claims, **characterized in that**, in addition to the shaped body (20), a base element (21) which is connected to the shaped body (20) and to the connecting element (6) or at least to one of the connecting elements (6) in a materially bonded manner is additively manufactured.

6. Method according to Claim 5, **characterized in that**, to machine the shaped body (20), the base element (21) is clamped into a clamping unit separate from the substrate unit (1) and supplied to at least one machining apparatus.

7. Method according to one of the preceding claims, **characterized in that** the method steps are carried out to produce at least two shaped bodies (20) which are arranged alongside one another on the same substrate unit (1).

8. Method according to one of the preceding claims, **characterized in that** the materially bonded connection between the shaped body (20) and a plurality of connecting elements (6) arranged detachably on the substrate unit is generated during the method step according to feature b) of Claim 1.

9. Method according to one of the preceding claims, **characterized in that** the shaped body (20), together with the connecting element(s) (6) connected to the shaped body (20) in a materially bonded manner, is separated from the substrate unit (1) and placed onto a clamping apparatus, wherein the clamping apparatus has (an) appropriate receptacle(s) for the connecting element(s) (6) connected to the shaped body (20).

10. Substrate unit system suitable for use in a method according to one of Claims 1 to 9, comprising
a) a substrate unit (1) with an application surface (3) which is composed of a first material and which is provided for the application of a starting material which is to be solidified for additive manufacturing on the substrate unit (1), and
b) at least one connecting element (6) arranged detachably in a working position on the substrate unit (1), wherein the at least one connecting element (6) is suitable for materially bonded connection to the starting material provided for the additive manufacturing,
**characterized by**
c) an application surface material which forms the application surface (3) and which does not form a materially bonded connection with the starting material under the conditions of the additive manufacturing.

11. Substrate unit system according to Claim 10, **characterized in that** the at least one connecting element (6) has in the working position a contact surface, which is flush or substantially flush with the application surface (3), for the materially bonded connection to the starting material.

12. Substrate unit system according to Claim 10 or 11, **characterized in that** the application surface (3) has at least one aperture (2) and the connecting element (6) or at least one of the connecting elements protrudes in the working position into the aperture (2).

13. Substrate unit system according to one of Claims 10 to 12, **characterized by** a locking unit (9) for fixing the at least one connecting element (6), wherein the fixing is form-fitting.

14. Substrate unit system according to Claim 13, **characterized in that** the locking unit (9) is configured to fix at least two connecting elements (6), preferably all the connecting elements (6) arranged in the substrate unit (1).

15. Substrate unit system according to Claim 13 or 14, **characterized in that** the locking unit (9) has at least one cut-out (10) for the at least one connecting element (6).

16. Substrate unit system according to one of Claims 13 to 15, **characterized in that** the locking unit (9) is movable relative to a further constituent part of the substrate unit (1) for a translational and/or rotational movement.

17. Substrate unit system according to one of Claims 10 to 16, **characterized by** a heating device integrated in the substrate unit (1).

## Revendications

1. Procédé de fabrication additive, selon lequel
a) un matériau de départ est appliqué sur une surface d'application (3) d'une unité de substrat (1),
b) au moins une partie du matériau de départ est solidifiée sur l'unité de substrat (1) pour la formation d'un corps moulé (20),
c) pendant l'étape de procédé selon la caractéristique b), une liaison par accouplement de matière est générée entre le corps moulé (20) et au moins un élément de liaison (6) agencé de manière détachable sur l'unité de substrat (1), et
d) le corps moulé (20) est détaché de l'unité de substrat (1),
**caractérisé en ce que**
e) un matériau de surface d'application est utilisé pour la surface d'application (3), qui ne crée pas de liaison par accouplement de matière avec le matériau de départ pendant l'étape de procédé b).

2. Procédé selon la revendication 1, **caractérisé en ce que** de l'énergie est apportée au matériau de départ pour le chauffage au moyen d'au moins un faisceau d'énergie, notamment au moyen d'au moins un faisceau laser.

3. Procédé selon la revendication 1 ou 2, **caractérisé en ce que** l'au moins un élément de liaison (6) est fixé de manière détachable au moyen d'un verrouillage mécanique, à savoir par accouplement de forme, sur l'unité de substrat (1).

4. Procédé selon l'une quelconque des revendications précédentes, **caractérisé en ce que** l'unité de substrat (1) est chauffée avant et/ou pendant la fabrication additive.

5. Procédé selon l'une quelconque des revendications précédentes, **caractérisé en ce qu'**en plus du corps moulé (20), un élément de base (21) relié par accouplement de matière avec le corps moulé (20) et l'élément de liaison (6) ou au moins un des éléments de liaison (6) est fabriqué additivement.

6. Procédé selon la revendication 5, **caractérisé en ce que**, pour l'usinage du corps moulé (20), l'élément de base (21) est serré dans une unité de serrage différente de l'unité de substrat (1) et apportée à au moins un dispositif d'usinage.

7. Procédé selon l'une quelconque des revendications précédentes, **caractérisé en ce que** les étapes de procédé sont réalisées pour la production d'au moins deux corps moulés (20) agencés les uns à côté des autres sur la même unité de substrat (1).

8. Procédé selon l'une quelconque des revendications précédentes, **caractérisé en ce que**, pendant l'étape de procédé selon la caractéristique b) de la revendication 1, la liaison par accouplement de matière est générée entre le corps moulé (20) et plusieurs éléments de liaison (6) agencés de manière détachable sur l'unité de substrat (1).

9. Procédé selon l'une quelconque des revendications précédentes, **caractérisé en ce que** le corps moulé (20) est séparé de l'unité de substrat (1) conjointement avec le ou les éléments de liaison (6) reliés par accouplement de matière avec le corps moulé (20) et placé sur un dispositif de serrage, le dispositif de serrage présentant un ou plusieurs logements adaptés au ou aux éléments de liaison (6) reliés avec le corps moulé (20).

10. Système d'unité de substrat approprié pour l'utilisation dans un procédé selon l'une quelconque des revendications 1 à 9, comprenant :
a) une unité de substrat (1) munie d'une surface d'application (3) constituée d'un premier matériau, qui est prévue pour l'application d'un matériau de départ à solidifier pour une fabrication additive sur l'unité de substrat (1), et
b) au moins un élément de liaison (6) agencé de manière détachable dans une position de travail sur l'unité de substrat (1), l'au moins un élément de liaison (6) étant approprié pour la liaison par accouplement de matière avec le matériau de départ prévu pour la fabrication additive,
**caractérisé par**
c) un matériau de surface d'application formant la surface d'application (3), qui ne crée pas de liaison par accouplement de matière avec le matériau de départ dans les conditions de la fabrication additive.

11. Système d'unité de substrat selon la revendication 10, **caractérisé en ce que** l'au moins un élément de liaison (6) présente dans la position de travail une surface de contact alignée ou essentiellement alignée avec la surface d'application (3), pour la liaison par accouplement de matière avec le matériau de départ.

12. Système d'unité de substrat selon la revendication 10 ou 11, **caractérisé en ce que** la surface d'application (3) comprend au moins une percée (2) et l'élément de liaison (6) ou au moins un des éléments de liaison pénètre dans la percée (2) dans la position de travail.

13. Système d'unité de substrat selon l'une quelconque des revendications 10 à 12, **caractérisé par** une unité de verrouillage (9) pour la fixation de l'au moins un élément de liaison (6), la fixation étant par accouplement de forme.

14. Système d'unité de substrat selon la revendication 13, **caractérisé en ce que** l'unité de verrouillage (9) est conçue pour fixer au moins deux éléments de liaison (6), de préférence tous les éléments de liaison (6) agencés dans l'unité de substrat (1).

15. Système d'unité de substrat selon la revendication 13 ou 14, **caractérisé en ce que** l'unité de verrouillage (9) comprend au moins un évidement (10) pour l'au moins un élément de liaison (6).

16. Système d'unité de substrat selon l'une quelconque des revendications 13 à 15, **caractérisé en ce que** l'unité de verrouillage (9) est mobile par rapport à un autre constituant de l'unité de substrat (1) pour un mouvement de translation et/ou de rotation.

17. Système d'unité de substrat selon l'une quelconque des revendications 10 à 16, **caractérisé par** un appareil de chauffage intégré dans l'unité de substrat (1).
